# FASCICULE DE BREVET EUROPEEN

(11) **EP 1 731 855 B1**
(45) Date de publication et mention de la délivrance du brevet: **17.03.2010**
(21) Numéro de dépôt: 06009323.4
(22) Date de dépôt: 05.05.2006
(51) Int. Cl.: F25B 43/00, B01D 29/00

(54) **Dispositif de filtration pour circuit de climatisation**
Filtervorrichtung für ein Klimatisierungsgerät
Filtration device for an air conditioning apparatus

(30) Priorité: 06.06.2005 FR 0505733
(43) Date de publication de la demande: 13.12.2006
(73) Titulaire: Valeo Systèmes Thermiques, 78321 Le Mesnil St Denis Cedex (FR)
(72) Inventeur: Pomme, Vincent, 78180 Montigny Le Bretonneux (FR)
(74) Mandataire: Léveillé, Christophe

(56) Documents cités:
- EP-A- 1 484 560
- WO-A-03/064941
- FR-A- 2 787 146
- US-A- 1 804 836
- US-A- 3 090 490
- US-A- 4 683 057
- PATENT ABSTRACTS OF JAPAN vol. 018, no. 204 (C-1189), 11 avril 1994 (1994-04-11) -& JP 06 007616 A (HITACHI LTD), 18 janvier 1994 (1994-01-18)
- PATENT ABSTRACTS OF JAPAN vol. 2000, no. 11, 3 janvier 2001 (2001-01-03) -& JP 2000 213831 A (MITSUBISHI ELECTRIC CORP), 2 août 2000 (2000-08-02)
- PATENT ABSTRACTS OF JAPAN vol. 1996, no. 01, 31 janvier 1996 (1996-01-31) -& JP 07 232013 A (MITSUBISHI HEAVY IND LTD), 5 septembre 1995 (1995-09-05)
- PATENT ABSTRACTS OF JAPAN vol. 009, no. 271 (C-311), 29 octobre 1985 (1985-10-29) & JP 60 122014 A (HITACHI SEISAKUSHO KK), 29 juin 1985 (1985-06-29)

## Description

L'invention se rapporte aux circuits de climatisation, notamment pour véhicules automobiles.

Elle concerne plus particulièrement un dispositif de filtration pour un circuit de climatisation parcouru par un fluide réfrigérant et comprenant notamment un compresseur et un détendeur.

Le dispositif de filtration de l'invention peut être utilisé dans les circuits de climatisation classiques parcourus par un fluide réfrigérant, généralement un composé fluoré, qui est présent en phase gazeuse et en phase liquide. Cependant, ce dispositif trouve un intérêt tout particulier dans le cas des circuits de climatisation dans lesquels le fluide réfrigérant fonctionne selon un cycle supercritique.

Les circuits de climatisation classiques ont pour principal inconvénient d'utiliser des fluides réfrigérants qui, en cas de fuite, dégagent dans l'atmosphère des composés néfastes pour l'environnement.

C'est la raison pour laquelle on cherche à remplacer ces fluides réfrigérants par des fluides moins nocifs, en particulier par des composés naturels, comme le dioxyde de carbone (CO₂). Ces fluides réfrigérants fonctionnent selon un cycle dit "supercritique" du fait qu'ils sont présents essentiellement en une seule phase, à savoir une phase gazeuse, et non pas en deux phases distinctes, comme dans le cas des fluides réfrigérants classiques.

On rappellera qu'un circuit de climatisation fonctionnant selon un cycle supercritique comprend, pour l'essentiel, un compresseur, un refroidisseur à gaz, un échangeur de chaleur interne, un détendeur, un évaporateur et un accumulateur.

Dans un circuit de climatisation parcouru par un fluide réfrigérant fonctionnant selon un cycle supercritique, la pression du fluide réfrigérant, par exemple du dioxyde de carbone, peut atteindre des valeurs de l'ordre de 130 bars du côté haute pression.

En conséquence, dans un tel circuit de climatisation, les dimensions des tubes, les diamètres des orifices et les tolérances dimensionnelles sont réduits comparativement aux circuits de climatisation fonctionnant avec des fluides réfrigérants classiques. Par ailleurs, les procédés de fabrications de ces composants, en particulier les échangeurs, sont directement liés au type de réfrigérant utilisé. Dans le cas des fluides supercritiques, la pression élevée impose l'utilisation de tubes fabriqués par extrusion. Ce procédé de fabrication laisse subsister des particules qui peuvent nuire au bon fonctionnement des composants.

Ces particules proviennent aussi du processus de brasage. En effet, l'utilisation de flux de brasage nécessaire à un bon soudage des éléments qui composent l'échangeur laisse aussi subsister des particules de tailles dangereuses pour le bon fonctionnement des composants.

Ceci est particulièrement le cas pour les compresseurs qui doivent présenter des orifices de commande ou des tolérances particulièrement faibles.

Il en résulte que les composants, d'un tel circuit de climatisation deviennent de plus en plus sensibles à la présence d'éléments polluants, tels que des particules solides contenues dans le fluide réfrigérant.

Ces particules solides proviennent de deux sources principales :
- la pollution de surfaces internes de composants du circuit, générée lors de la production de ces composants ; et
- le frottement de pièces mobiles des composants, telles que des pièces du compresseur, pendant le fonctionnement.

La présence de telles particules solides rend la présence d'un dispositif de filtration nécessaire pour les éliminer.

JP-A-06 007 616 décrit un dispositif de filtration telque énoncé dans le préambule de la revendication 1.

En outre, il a été constaté que la quantité de particules présentes est plus importante dans des composants nouvellement produits, c'est-à-dire résultant des procédés de fabrication de ces composants, donc au début de la mise en service de l'installation, que pendant le reste de la durée de service de l'installation, c'est-à-dire du circuit de climatisation.

Il apparaît donc que le taux de particules solides à filtrer pendant toute la durée de vie de l'installation n'est pas constant et qu'il est particulièrement élevé au tout début, alors qu'il est beaucoup plus faible ensuite.

L'invention a notamment pour but de remédier à cette situation.

Elle vise principalement à procurer un dispositif de filtration pour un circuit de climatisation parcouru par un fluide réfrigérant, qui permet d'éliminer les particules véhiculées par le fluide réfrigérant.

L'invention vise notamment à éviter le recours à des procédés de nettoyage, difficiles et longs à mettre en oeuvre, et à diminuer ainsi les coûts de production.

Elle vise plus particulièrement à procurer un tel dispositif de filtration qui permet de retenir essentiellement les particules véhiculées par le fluide réfrigérant au début du fonctionnement du circuit de climatisation.

L'invention vise encore à procurer un tel dispositif de filtration qui permet aussi de retenir les particules véhiculées par le fluide réfrigérant pendant le reste de la durée de fonctionnement du circuit de climatisation.

Elle vise encore à procurer un dispositif de filtration du type précité qui trouve un intérêt tout particulier dans le cas des circuits de climatisation parcourus par un fluide réfrigérant fonctionnant selon un cycle supercritique.

L'invention propose à cet effet un dispositif de filtration, du type défini précédemment, définit selon la revendication 1.

Ainsi, lorsque le circuit de climatisation est mis en service, le filtre primaire agit pour retenir les particules véhiculées par le fluide réfrigérant, dont la taille est supérieure à la dimension des ouvertures du milieu filtrant du filtre.

Lorsque ce filtre devient colmaté ou encrassé par les particules solides qu'il retient, la soupape de sécurité agit pour laisser passer le fluide réfrigérant. De la sorte, le filtre primaire capture toutes les particules présentes qui sont générées par tous les composants, nouvellement produits, du circuit de climatisation. Lorsque la soupape de sécurité s'ouvre, elle laisse passer un fluide réfrigérant qui a été au préalable débarrassé de ses particules polluantes.

L'un des principaux avantages de cette solution est que l'on évite ainsi le recours à un procédé de nettoyage, difficile et long à mettre en oeuvre, avec pour conséquence une diminution des coûts de production.

Les ouvertures du filtre primaire ont avantageusement une dimension de l'ordre de 10 micromètres.

La surface de retenue du filtre primaire est conçue pour retenir les particules. Cette surface de retenue est de forme généralement tronconique avec une extrémité rétrécie, dans laquelle est logée la soupape de sécurité.

La soupape de sécurité comporte avantageusement un clapet sollicité par un ressort en direction d'un siège de clapet. Dans une forme de réalisation avantageuse, la soupape de sécurité comporte des moyens de maintien propre à la maintenir dans la position de pleine ouverture, une fois le filtre primaire colmaté.

Le filtre primaire est placé en un endroit choisi du circuit, avantageusement en amont du compresseur par rapport au sens de circulation du fluide réfrigérant. Le compresseur se trouve ainsi protégé à l'égard de risques d'endommagement par les particules véhiculées par le fluide réfrigérant.

Dans une forme de réalisation préférée de l'invention, le dispositif de filtration comprend en outre un filtre secondaire placé dans le circuit et comportant un milieu filtrant avec une surface de retenue et avec des ouvertures de dimension supérieure à celles du filtre primaire de manière à retenir des particules véhiculées par le fluide réfrigérant, dont la taille est supérieure à cette dimension, une fois que le filtre primaire est colmaté et que la soupape de sécurité du filtre primaire est ouverte.

Autrement dit, le filtre secondaire agit essentiellement pendant la phase de fonctionnement normal du circuit, alors que le fluide primaire fonctionne essentiellement pendant une phase initiale, ou phase de nettoyage du circuit.

La phase de fonctionnement normal se caractérise par un faible taux de particules émises qui nécessite, par conséquent, des capacités plus faibles de filtration et de retenue que pendant la phase initiale.

Le filtre secondaire peut ainsi retenir des particules ayant une taille supérieure à celle des particules retenues par le filtre primaire.

De façon avantageuse, les ouvertures du filtre secondaire ont une dimension de l'ordre de 30 micromètres.

Selon une autre caractéristique de l'invention, le filtre secondaire est muni d'une soupape de sécurité apte à laisser passer le fluide réfrigérant lorsque la surface de retenue du filtre secondaire est colmatée par les particules qu'elle retient.

Il est avantageux que le filtre secondaire comporte en outre un détecteur de colmatage. Ce dernier peut être éventuellement combiné à la soupape de sécurité.

Le filtre secondaire est avantageusement placé en amont du compresseur par rapport au sens de circulation du fluide réfrigérant.

Dans une forme de réalisation préférée, le filtre secondaire est placé en amont du filtre primaire par rapport au sens de circulation du fluide réfrigérant.

Toutefois il est envisageable aussi de placer le filtre primaire en amont du filtre secondaire.

Sous un autre aspect, l'invention concerne un circuit de climatisation propre à être parcouru par un fluide réfrigérant et comprenant notamment un compresseur et un détendeur, ce circuit comportant un dispositif de filtration tel que défini précédemment.

Dans une application préférentielle, le fluide réfrigérant est propre à fonctionner selon un cycle supercritique, et le circuit de climatisation comprend un compresseur, un refroidisseur à gaz, un échangeur de chaleur interne, un détendeur, un évaporateur et un accumulateur.

Dans cette application particulière, le filtre primaire et le filtre.secondaire sont avantageusement placés dans une même branche du circuit entre l'échangeur de chaleur interne et le compresseur.

L'invention concerne aussi, encore sous un autre aspect, un procédé de nettoyage d'un circuit de climatisation parcouru par un fluide réfrigérant et comprenant notamment un compresseur et un détendeur, dans lequel on réalise une filtration du fluide réfrigérant dans le circuit de climatisation au moyen d'un dispositif de filtration tel que défini plus haut.

Dans la description qui suit, faite seulement à titre d'exemple, on se réfère aux dessins annexés, sur lesquels :
- la figure 1 représente un circuit de climatisation fonctionnant avec un fluide réfrigérant selon un cycle supercritique et muni d'un dispositif de filtration selon l'invention, comprenant un filtre primaire et un filtre secondaire;
- la figure 2 est une vue en coupe d'un filtre primaire avant colmatage, la soupape de sécurité étant en position de fermeture ;
- la figure 3 est une vue analogue à la figure 2 dans laquelle le filtre primaire est colmaté et la soupape de sécurité est en position de pleine ouverture ;
- les figures 4, 5 et 6 représentent une soupape de sécurité respectivement en position de fermeture, d'ouverture partielle et de pleine couverture ;
- la figure 7 représente une vue en coupe d'un filtre secondaire dans une forme de réalisation ;
- la figure 8 représente une vue en coupe d'un filtre secondaire dans une autre forme de réalisation ; et
- les figures 9 et 10 représentent un filtre secondaire muni d'un détecteur de colmatage, respectivement avant colmatage et après colmatage.

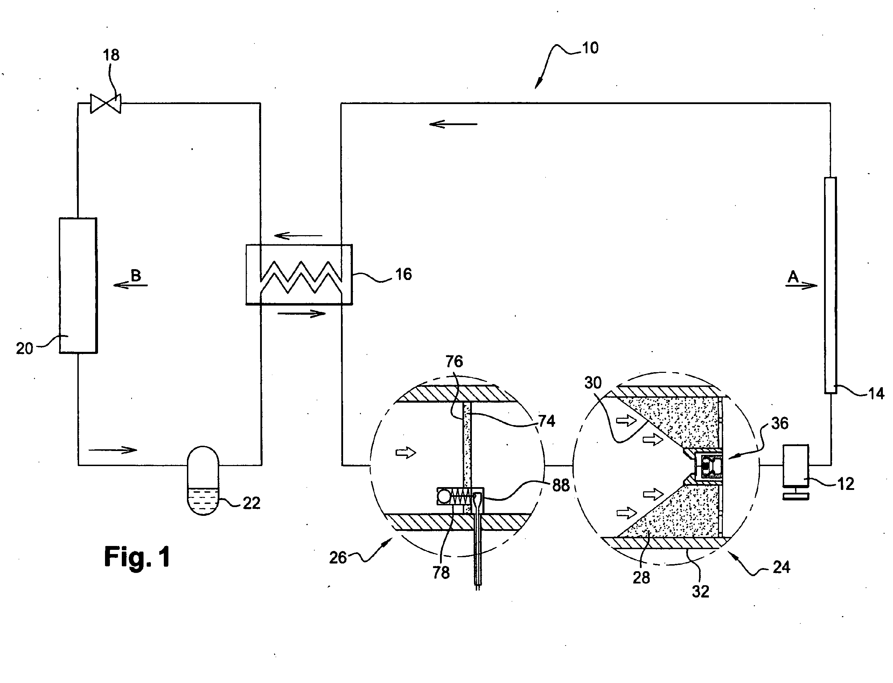

On se réfère d'abord à la figure 1 qui montre un circuit de climatisation 10 destiné, dans l'exemple, à faire partie d'un véhicule automobile pour assurer la climatisation de l'habitacle. Le circuit 10 est propre à être parcouru par un fluide réfrigérant, en particulier du dioxyde de carbone (CO₂), fonctionnant selon un cycle supercritique, c'est-à-dire présent essentiellement en phase gazeuse.

Le circuit 10 comprend un compresseur 12 propre à comprimer le fluide réfrigérant en phase gazeuse depuis une basse pression jusqu'à une haute pression. Le fluide réfrigérant ainsi comprimé traverse ensuite un refroidisseur à gaz 14 propre à être balayé par un flux d'air A pour refroidir le fluide réfrigérant. Ce refroidisseur à gaz remplace le condenseur utilisé dans les circuits de climatisation classiques fonctionnant avec un fluide réfrigérant présent sous deux phases distinctes.

À la sortie du refroidisseur à gaz 14, le fluide réfrigérant est envoyé vers un échangeur de chaleur interne 16 et parvient ensuite à un détendeur 18 dans lequel il passe d'une haute pression à une basse pression avant de gagner un évaporateur 20. Celui-ci est propre à être balayé par un flux d'air B qui est refroidi par échange thermique avec le fluide réfrigérant pour produire un flux d'air refroidi, encore appelé air climatisé, à envoyer dans l'habitacle du véhicule.

À la sortie de l'évaporateur 20, le fluide réfrigérant passe par un accumulateur 22 avant de traverser à nouveau l'échangeur de chaleur interne 16 et de regagner le compresseur 12. Dans l'échangeur de chaleur interne 16, le fluide réfrigérant surchauffé à haute pression échange de la chaleur avec le fluide réfrigérant refroidi et à basse pression.

Un tel circuit est connu de façon générale. Du fait qu'il fonctionne avec un fluide réfrigérant en phase gazeuse sous une pression élevée, typiquement supérieure à 130 bars, les sections des conduits, les diamètres des orifices et les tolérances dimensionnelles sont sensiblement réduits en comparaison des circuits de climatisation classiques.

C'est la raison pour laquelle, comme déjà rappelé plus haut, ces circuits de climatisation fonctionnant avec un fluide réfrigérant en cycle supercritique sont plus sensibles à la présence d'éléments polluants, en particulier de particules solides contenues dans le réfrigérant.

Le circuit de climatisation de la figure 1 est muni d'un dispositif de filtration selon l'invention qui comprend essentiellement un filtre primaire 24 et un filtre secondaire 26. Ces deux filtres sont représentés chacun en vue détaillée agrandie délimitée à chaque fois par un cercle.

Le filtre primaire 24 est placé en amont du compresseur 12 par rapport au sens de circulation du fluide réfrigérant, comme indiqué par les flèches. Plus particulièrement, le filtre primaire 24 est placé dans une branche du circuit entre l'échangeur de chaleur interne 16 et le compresseur 12.

Le filtre secondaire 26 est, lui aussi, placé en amont du compresseur 12 par rapport au sens de circulation du fluide réfrigérant. Plus particulièrement, le filtre secondaire 26 est placé dans la même branche du circuit que le filtre primaire 24, c'est-à-dire entre l'échangeur de chaleur interne 16 et le compresseur 12. Dans l'exemple représenté le filtre secondaire 26 est placé en amont du filtre primaire 24 par rapport au sens de circulation du fluide réfrigérant. Toutefois, dans une variante (non représentée), le filtre primaire 24 pourrait être placé en amont du filtre secondaire 26 par rapport au sens de circulation du fluide réfrigérant, et dans la même branche du circuit, comme indiqué précédemment.

Le filtre primaire 24 comporte un milieu filtrant 28 (encore appelé média filtrant) ayant une surface de retenue 30, ici de forme tronconique, pour retenir des particules véhiculées par le fluide réfrigérant. Le milieu filtrant 28 est placé à l'intérieur d'un conduit cylindrique 32. La surface de retenue 30 comporte une extrémité rétrécie 34 dans laquelle est logée une soupape de sécurité 36 qui comprend un clapet 38, ici en forme de bille, sollicité par un ressort 40 en direction d'un siège de clapet 42. Cette soupape est agencée pour s'opposer à la circulation du fluide réfrigérant à haute pression qui quitte l'échangeur de chaleur interne 16 pour gagner le compresseur 12.

Le milieu filtrant 28 comporte des ouvertures de dimension choisie, typiquement de l'ordre de 10 micromètres, pour retenir des particules véhiculées par le fluide réfrigérant, dont la taille est supérieure à cette dimension. On comprendra que le filtre primaire est destiné essentiellement à fonctionner dans une phase de démarrage du circuit, dite phase de nettoyage, pour filtrer et retenir les particules présentes initialement dans le circuit.

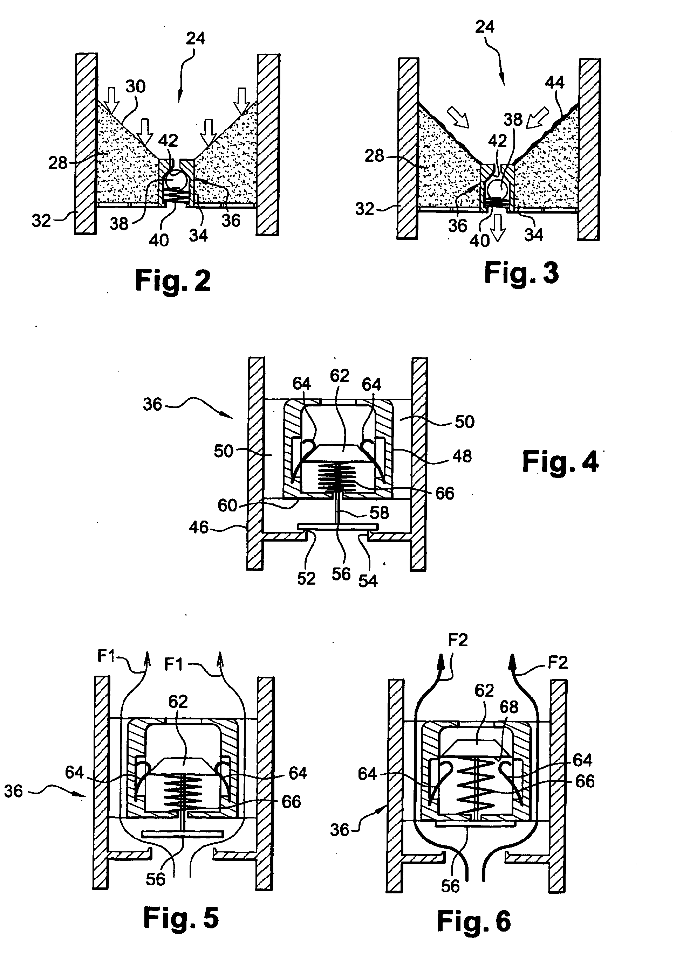

Au démarrage, le filtre n'est pas colmaté. Les particules dont la taille est inférieure à la dimension choisie peuvent passer à travers le milieu filtrant 28 comme montré par les flèches de la figure 2. En revanche, les particules dont la taille est supérieure à la dimension choisie sont retenues à la surface du milieu filtrant 28. Dans cette phase initiale, le clapet de sécurité 36 est dans une position fermée empêchant le passage du fluide réfrigérant. En conséquence, tout le fluide réfrigérant est obligé de passer par le milieu filtrant 28.

Au cours de la filtration, des particules solides viennent se déposer sur la surface 30 en formant un dépôt 44 comme montré à la figure 3. À mesure que le colmatage se poursuit, le fluide réfrigérant ne peut plus traverser le milieu filtrant 28 et vient agir contre le clapet 38 de la soupape de sécurité 36, comme montré par la figure 3, pour le déplacer vers une position de pleine ouverture. Le fluide réfrigérant se trouve ainsi débarrassé de ses particules polluantes, ici des particules de taille supérieure à 10 micromètres.

Le fluide réfrigérant ainsi filtré par le filtre primaire 24 peut ensuite circuler dans le circuit, c'est-à-dire traverser successivement le compresseur 12, le refroidisseur à gaz 14, une branche de l'échangeur de chaleur interne 16, le détendeur 18, l'évaporateur 20, l'accumulateur 22 et une autre branche de l'échangeur de chaleur interne 16, avant d'être filtré par le filtre secondaire 26 et de gagner à nouveau le filtre primaire 24.

Les particules solides présentes dans les composants les plus importants du circuit (refroidisseur à gaz, échangeur de chaleur interne et évaporateur) sont piégées avant qu'elles ne risquent d'endommager le compresseur, ce dernier étant l'élément du circuit, qui est le plus sensible à ces particules.

Les figures 4 à 6 illustrent un exemple de réalisation d'une soupape de sécurité 36, dans trois positions différentes. La soupape de sécurité 36 comporte un conduit 46 au centre duquel est placé un corps tubulaire 48, des passages de fluide 50 étant définis entre le conduit 46 et le corps tubulaire 48. Un siège de clapet 52 délimitant une ouverture axiale 54 est logé dans le conduit 46, un clapet 56 en forme de disque étant agencé pour fermer le siège de clapet 52. Ce clapet 56 est solidaire d'une tige 58 qui passe au travers d'une paroi de fond 60 du corps 48. À son autre extrémité, la tige est solidaire d'un corps tronconique 62.

Ce dernier coopère avec des lames de ressort 64 de forme incurvée, montés à l'intérieur du corps tubulaire 48. Ces lames de ressort 64 sont conçues pour coopérer avec le corps tronconique 62 et solliciter le clapet 56 en appui contre le siège de clapet 52 comme montré à la figure 4. Par ailleurs, un ressort hélicoïdal est placé autour de la tige 58 en prenant appui, d'une part, contre la paroi de fond 60 et, d'autre part, contre le corps tronconique 62.

La soupape de sécurité 36 des figures 4 à 6 fonctionne de la façon suivante. Au début de la mise en service du circuit de climatisation, lorsque le filtre primaire n'est pas colmaté, la soupape est en position fermée (figure 4) de façon analogue à la soupape de la figure 2. Ensuite, le filtre se colmate très rapidement du fait des particules solides présentes dans le circuit. La soupape s'ouvre partiellement, comme montré à la figure 5, pour laisser passer un léger débit de fluide réfrigérant comme montré par les flèches F1, et parvient ensuite dans une position de pleine ouverture, comme représenté à la figure 6, qui correspond à la position de la figure 3. Autrement dit, tout le fluide réfrigérant est alors obligé de passer par les passages (50) de la soupape de sécurité, comme montré par les flèches F2. Le passage de la position de fermeture à la position de pleine ouverture s'effectue rapidement et au tout début de la mise en service du circuit de climatisation, ce qui permet d'assurer son nettoyage.

On remarque que, dans la position de pleine ouverture, les lames de ressort 64 coopèrent avec une base élargie 68 du corps tronconique 62 pour retenir la soupape dans cette position. Autrement dit, à partir du moment où le milieu filtrant 28 est colmaté, la soupape est maintenue en position de pleine ouverture et le fluide réfrigérant ne peut passer que par les passages 50 de la soupape de sécurité.

Le filtre secondaire 26 est conçu pour fonctionner durant le mode de fonctionnement normal du filtre, une fois le filtre primaire 24 colmaté.

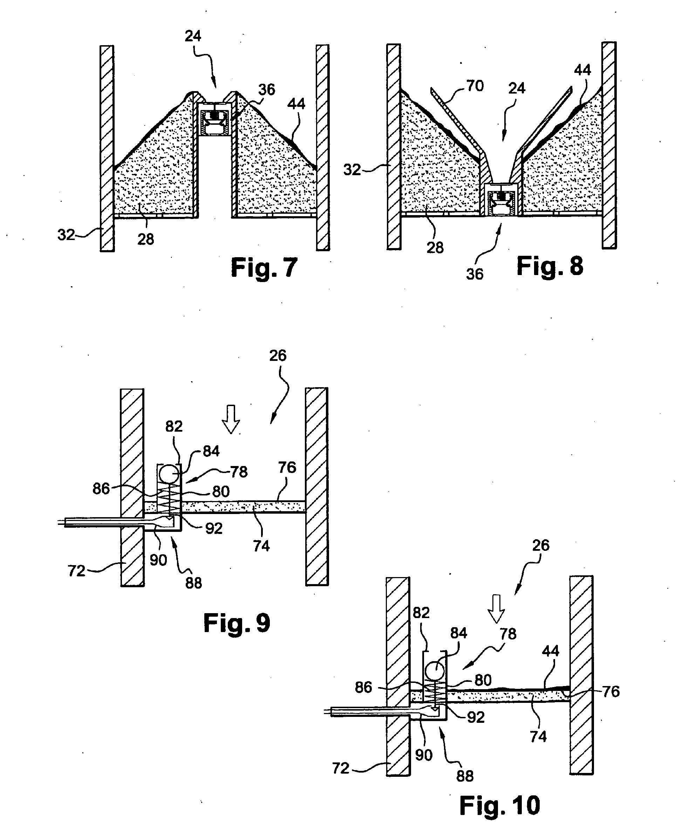

La figure 7 montre une autre forme de réalisation particulièrement avantageuse du filtre primaire, dans laquelle la surface de retenue 30 du milieu filtrant 28 a une forme tronconique inversée par rapport à la forme de réalisation des figures 2 et 3. Autrement dit, la surface tronconique 30 a une forme de tronc de cône rentrant et non d'une forme de tronc de cône sortant. I1 en résulte pour avantage que les particules s'accumulent dans une région périphérique du milieu filtrant, en évitant qu'elles s'accumulent dans la région centrale du milieu filtrant où se trouve la soupape de sécurité.

Dans le cas de la figure 8, la forme de la surface tronconique 30 est analogue à celle des figures 2 et 3. Un organe de retenue 70, également de forme tronconique, est placé à distance de la surface tronconique 30 pour former un espace de retenue des particules. Il en résulte également pour avantage que les particules ne peuvent parvenir à la région centrale du milieu filtrant où se trouve la soupape de sécurité.

On se réfère maintenant à la figure 9 qui montre un exemple de réalisation d'un filtre secondaire 26. Celui-ci comporte un conduit 72 dans lequel est placé un milieu filtrant 74, ici en forme de disque. Ce milieu filtrant comporte une surface de retenue 76 formée par l'une des faces du disque. Le milieu filtrant 74 comporte des ouvertures de dimension supérieure à celles du filtre primaire, par exemple de l'ordre de 30 micromètres, de manière à retenir des particules véhiculées par le fluide réfrigérant, dont la taille est supérieure à cette dimension. Comme déjà indiqué, le filtre secondaire agit une fois que le filtre primaire est colmaté et que la soupape de sécurité du filtre primaire est ouverte.

Dans l'exemple, le filtre secondaire 26 est muni d'une soupape de sécurité 78 comportant un tube 80 qui traverse le milieu filtrant 76 et qui définit un siège de clapet 82 pour un clapet 84, ici en forme de bille, sollicité par un ressort 86. Le filtre secondaire 26 est par ailleurs muni d'un détecteur de colmatage 88 qui, dans l'exemple, est intégré à la soupape de sécurité 78. Ce détecteur de colmatage 88 comporte un interrupteur 90 propre à être actionné par un pointeau 92 solidaire du clapet 84.

Lorsque le filtre secondaire n'est pas colmaté (figure 9), la soupape de sécurité 78 est en position fermée et le fluide réfrigérant est obligé de passer à travers le milieu filtrant 74. A mesure que ce milieu filtrant est colmaté (figure 10) la soupape s'ouvre et actionne le détecteur de colmatage 88 pour envoyer un signal approprié, par exemple sur le tableau de bord du véhicule. Une intervention peut alors être effectuée pour nettoyer le filtre secondaire ou éventuellement le changer. Le circuit peut ainsi continuer à fonctionner, au moins temporairement, sans que le fluide réfrigérant ne soit filtré.

Suivant d'autres variantes, le filtre secondaire 26 peut être équipé seulement d'une soupape de sécurité ou seulement d'un détecteur de colmatage. Il est envisageable aussi que le détecteur de colmatage commande automatiquement l'arrêt du circuit de climatisation lorsqu'un colmatage est détecté.

L'invention concerne aussi un procédé de nettoyage d'un circuit de climatisation, dans lequel on réalise une filtration du fluide réfrigérant dans le circuit au moyen d'un dispositif de filtration tel que défini ci-dessus.

Ce procédé peut ainsi être mis en oeuvre dès la première mise en service du circuit de climatisation, c'est-à-dire habituellement en sortie de chaîne de fabrication du véhicule qui en est équipé.

Le dispositif de filtration de l'invention offre les principaux avantages suivants :
- il s'adapte étroitement aux besoins de filtration du circuit de climatisation pendant la durée de service de ce dernier ;
- la retenue des particules sur le filtre primaire, au début de la durée de vie du circuit de climatisation, ne pénalise pas le fonctionnement ultérieur de ce circuit pendant le reste de sa durée de vie ;
- les filtres peuvent avoir une taille réduite ;
- les filtres peuvent être réalisés faible coût ;
- le processus de nettoyage du circuit de climatisation est optimisé et permet une réduction du coût des composants ;
- la fiabilité du circuit de climatisation est accrue du fait que le filtre primaire est intégré à proximité de l'aspiration du compresseur ; et
- la présence d'une soupape de sécurité évite toute possibilité de surpression du compresseur.

L'invention n'est pas limitée aux formes de réalisation décrites précédemment à titre d'exemples.

Par ailleurs, bien que l'invention ait été décrite en référence particulière à un circuit de climatisation parcouru par un fluide réfrigérant fonctionnant selon un cycle supercritique, elle peut être utilisée aussi avec des circuits de climatisation classiques.

## Revendications

1. Dispositif de filtration pour un circuit de climatisation parcouru par un fluide réfrigérant et comprenant notamment un compresseur et un détendeur, un filtre primaire (24) placé dans le circuit et comportant un milieu filtrant (28) avec une surface de retenue (30) et avec des ouvertures de dimension choisie de manière à retenir des particules véhiculées par le fluide réfrigérant, dont la taille est supérieure à cette dimension, ainsi qu'une soupape de sécurité (36) apte à laisser passer le fluide réfrigérant lorsque la surface de retenue (30) du filtre primaire est colmatée par les particules qu'elle retient, **caractérisé en ce que** la surface de retenue (30) du filtre primaire (24) est de forme généralement tronconique avec une extrémité rétrécie (34) dans laquelle est logée la soupape de sécurité (36).

2. Dispositif de filtration selon la revendication 1, **caractérisé en ce que** les ouvertures du filtre primaire (24) ont une dimension de l'ordre de 10 micromètres.

3. Dispositif de filtration selon l'une des revendications 1 à 2, **caractérisé en ce que** la soupape de sécurité (36) comporte un clapet (38) sollicité par un ressort (40) en direction d'un siège de clapet (42).

4. Dispositif de filtration selon l'une des revendications 1 à 3, **caractérisé en ce que** la soupape de sécurité (36) comporte des moyens de maintien (64) propres à la maintenir dans la position de pleine ouverture, une fois le filtre primaire (24) colmaté.

5. Dispositif de filtration selon l'une des revendications 1 à 4, **caractérisé en ce que** le filtre primaire (24) est placé en amont du compresseur (12) par rapport au sens de circulation du fluide réfrigérant.

6. Dispositif de filtration selon l'une des revendications 1 à 5, **caractérisé en ce qu'**il comprend en outre un filtre secondaire (26) placé dans le circuit et comportant un milieu filtrant (74) avec une surface de retenue (76) et avec des ouvertures de dimension supérieure à celles du filtre primaire (24) de manière à retenir des particules véhiculées par le filtre réfrigérant, dont la taille est supérieure à cette dimension, une fois que le filtre primaire (24) est colmaté et que la soupape de sécurité (36) du filtre primaire est ouverte.

7. Dispositif de filtration selon la revendication 6, **caractérisé en ce que** les ouvertures du filtre secondaire (26) ont une dimension de l'ordre de 30 micromètres.

8. Dispositif de filtration selon l'une des revendications 6 et 7, **caractérisé en ce que** le filtre secondaire (26) est muni d'une soupape de sécurité (78) apte à laisser passer le fluide réfrigérant lorsque la surface de retenue (76) du fluide secondaire est colmatée par les particules qu'elle retient.

9. Dispositif de filtration selon l'une des revendications 6 à 8, **caractérisé en ce que** le filtre secondaire (26) est muni d'un détecteur de colmatage (88).

10. Dispositif de filtration selon l'une des revendications 6 à 9, **caractérisé en ce que** le filtre secondaire (26) est placé en amont du compresseur (12) par rapport au sens de circulation du fluide réfrigérant.

11. Dispositif de filtration selon la revendication 10, **caractérisé en ce que** le filtre secondaire (26) est placé en amont du filtre primaire (24) par rapport au sens de circulation du fluide réfrigérant.

12. Circuit de climatisation propre à être parcouru par un fluide réfrigérant et comprenant notamment un compresseur et un détendeur, **caractérisé en ce qu'**il comporte un dispositif de filtration selon l'une des revendications 1 à 11.

13. Circuit de climatisation selon la revendication 12, **caractérisé en ce que** le fluide réfrigérant est propre à fonctionner selon un cycle supercritique, et **en ce que** le circuit de climatisation comprend un compresseur (12), un refroidisseur à gaz (14), un échangeur de chaleur interne (16), un détendeur (18), un évaporateur (20) et un accumulateur (22).

14. Circuit de climatisation selon la revendication 13, **caractérisé en ce que** le dispositif de filtration est conforme à l'une des revendications 8 à 12, le filtre primaire (24) et le filtre secondaire (26) étant placé dans une même branche du circuit entre l'échangeur de chaleur interne (16) et le compresseur (12).

15. Procédé de nettoyage d'un circuit de climatisation parcouru par un fluide réfrigérant et comprenant notamment un compresseur et un détendeur, **caractérisé en ce que** l'on réalise une filtration du fluide réfrigérant dans le circuit de climatisation au moyen d'un dispositif de filtration selon l'une des revendications 1 à 11.

## Claims

1. Filtering device for an air-conditioning system through which flows a refrigerating fluid and comprising in particular a compressor and an expansion device, a primary filter (24) placed in the system and comprising a filter medium (28) with a retaining surface (30) and with openings of a dimension chosen in such a way as to retain particles carried by the refrigerating fluid, of which the size is greater than this dimension, as well as a safety valve (36) able to allow the refrigerating fluid to pass when the retaining surface (30) of the primary filter is clogged by the particles that it is retaining, **characterised in that** the retaining surface (30) of the primary filter (24) has a generally tapered form with a narrowed end (34) wherein the safety valve (36) is housed.

2. Filtering device according to claim 1, **characterised in that** the openings of the primary filter (24) have a dimension of a magnitude of 10 micrometres.

3. Filtering device according to one of claims 1 to 2, **characterised in that** the safety valve (36) comprises a valve (38) solicited by a spring (40) in the direction of a valve seat (42).

4. Filtering device according to one of claims 1 to 3, **characterised in that** the safety valve (36) comprises means of maintaining (64) that can maintain it in the fully-opened position, once the primary filter (24) is clogged.

5. Filtering device according to one of claims 1 to 4, **characterised in that** the primary filter (24) is placed upstream of the compressor (12) in relation to direction of circulation of the refrigerating fluid.

6. Filtering device according to one of claims 1 to 5, **characterised in that** it further comprises a secondary filter (26) placed in the system and comprising a filter medium (74) with a retaining surface (76) and with openings of a dimension superior to those of the primary filter (24) in such a way as to retain particles carried by the refrigerating fluid filter, of which the size is greater than this dimension, once the primary filter (24) is clogged and that the safety valve (36) of the primary filter is open.

7. Filtering device according to claim 6, **characterised in that** the openings of the secondary filter (26) have a dimension of a magnitude of 30 micrometres.

8. Filtering device according to one of claims 6 and 7, **characterised in that** the secondary filter (26) is provided with a safety valve (78) able to allow the refrigerating fluid to pass when the retaining surface (76) of the secondary fluid is clogged by the particles that it is retaining.

9. Filtering device according to one of claims 6 to 8, **characterised in that** the secondary filter (26) is provided with a clogging detector (88).

10. Filtering device according to one of claims 6 to 9, **characterised in that** the secondary filter (26) is placed upstream of the compressor (12) in relation to the direction of circulation of the refrigerating fluid.

11. Filtering device according to claim 10, **characterised in that** the secondary filter (26) is placed upstream of the primary filter (24) in relation to the direction of circulation of the refrigerating fluid.

12. Air-conditioning system through which a refrigerating fluid can flow and comprising in particular a compressor and an expansion device, **characterised in that** it comprises a filtering device according to one of claims 1 to 11.

13. Air-conditioning system according to claim 12, **characterised in that** the refrigerating fluid is able to function according to a supercritical cycle, and **in that** the air-conditioning system comprises a compressor (12), a gas cooler (14), an internal heat exchanger (16), an expansion device (18), an evaporator (20) and an accumulator (22).

14. Air-conditioning system according to claim 13, **characterised in that** the filtering device is compliant with one of claims 8 to 12, the primary filter (24) and the secondary filter (26) being placed in the same branch of the system between the internal heat exchanger (16) and the compressor (12).

15. Method for cleaning an air-conditioning system through which flows a refrigerating fluid and comprising in particular a compressor and an expansion device, **characterised in that** a filtration of the refrigerating fluid is carried out in the air-conditioning system by means of a filtering device according to one of claims 1 to 11.

## Patentansprüche

1. Filtrationsvorrichtung für einen Klimasteuerungskreislauf, der von einem Kältemittel durchflossen wird und insbesondere umfassend einen Verdichter und ein Expansionsventil, einen Hauptfilter (24), der im Kreislauf angeordnet ist und ein Filtermedium (28) mit einer Rückhaltefläche (30) und mit Öffnungen umfasst, die eine Dimension aufweisen, die so gewählt ist, dass Partikel zurückgehalten werden, die vom Kältemittel transportiert werden und deren Größe größer als diese Dimension ist, sowie ein Sicherheitsventil (36), das imstande ist, das Kältemittel passieren zu lassen, wenn die Rückhaltefläche (30) des Hauptfilters von den Partikeln, die sie zurückhält, verstopft wird, **dadurch gekennzeichnet, dass** die Rückhaltefläche (30) des Hauptfilters (24) eine im Allgemeinen kegelstumpfartige Form mit einem verjüngten Ende (34) aufweist, in dem das Sicherheitsventil (36) untergebracht ist.

2. Filtrationsvorrichtung nach Anspruch 1, **dadurch gekennzeichnet, dass** die Öffnungen des Hauptfilters (24) eine Dimension aufweisen, die im Bereich von 10 Mikrometern liegt.

3. Filtrationsvorrichtung nach einem der Ansprüche 1 bis 2, **dadurch gekennzeichnet, dass** das Sicherheitsventil (36) eine Klappe (38) umfasst, die von einer Feder (40) in Richtung eines Klappensitzes (42) beansprucht wird.

4. Filtrationsvorrichtung nach einem der Ansprüche 1 bis 3, **dadurch gekennzeichnet, dass** das Sicherheitsventil (36) Haltemittel (64) umfasst, die in der Lage sind, es in vollständig geöffneter Position zu halten, sobald der Hauptfilter (24) verstopft ist.

5. Filtrationsvorrichtung nach einem der Ansprüche 1 bis 4, **dadurch gekennzeichnet, dass** der Hauptfilter (24) dem Verdichter (12) in Bezug auf die Umlaufrichtung des Kältemittels vorgelagert ist.

6. Filtrationsvorrichtung nach einem der Ansprüche 1 bis 5, **dadurch gekennzeichnet, dass** sie ferner einen Nebenfilter (26) umfasst, der im Kreislauf angeordnet ist und ein Filtermedium (74) mit einer Rückhaltefläche (76) und mit Öffnungen umfasst, die eine Dimension aufweisen, die größer als jene des Hauptfilters (24) ist, sodass Partikel, die vom Kältemittel transportiert werden und deren Größe größer als diese Dimension ist, zurückgehalten werden, sobald der Hauptfilter (24) verstopft ist und das Sicherheitsventil (36) des Hauptfilters geöffnet ist.

7. Filtrationsvorrichtung nach Anspruch 6, **dadurch gekennzeichnet, dass** die Öffnungen des Nebenfilters (26) eine Dimension aufweisen, die im Bereich von 30 Mikrometern liegt.

8. Filtrationsvorrichtung nach einem der Ansprüche 6 und 7, **dadurch gekennzeichnet, dass** der Nebenfilter (26) mit einem Sicherheitsventil (78) ausgestattet ist, das imstande ist, das Kältemittel passieren zu lassen, wenn die Rückhaltefläche (76) des Nebenfilters von den Partikeln, die sie zurückhält, verstopft wird.

9. Filtrationsvorrichtung nach einem der Ansprüche 6 bis 8, **dadurch gekennzeichnet, dass** der Nebenfilter (26) mit einem Verstopfungsdetektor (88) ausgestattet ist.

10. Filtrationsvorrichtung nach einem der Ansprüche 6 bis 9, **dadurch gekennzeichnet, dass** der Nebenfilter (26) dem Verdichter (12) in Bezug auf die Umlaufrichtung des Kältemittels vorgelagert ist.

11. Filtrationsvorrichtung nach Anspruch 10, **dadurch gekennzeichnet, dass** der Nebenfilter (26) dem Hauptfilter (24) in Bezug auf die Umlaufrichtung des Kältemittels vorgelagert ist.

12. Klimasteuerungskreislauf, der in der Lage ist, von einem Kältemittel durchflossen zu werden und insbesondere umfassend einen Verdichter und ein Expansionsventil, **dadurch gekennzeichnet, dass** er eine Filtrationsvorrichtung nach einem der Ansprüche 1 bis 11 umfasst.

13. Klimasteuerungskreislauf nach Anspruch 12, **dadurch gekennzeichnet, dass** das Kältemittel in der Lage ist, gemäß einem superkritischen Zyklus zu funktionieren, und dass der Klimasteuerungskreislauf einen Verdichter (12), einen Gaskühler (14), einen internen Wärmeaustauscher (16) ein Expansionsventil (18), einen Verdampfer (20) und einen Akkumulator (22) umfasst.

14. Klimasteuerungskreislauf nach Anspruch 13, **dadurch gekennzeichnet, dass** die Filtrationsvorrichtung einem der Ansprüche 8 bis 12 entspricht, wobei der Hauptfilter (24) und der Nebenfilter (26) im gleichen Zweig des Kreislaufs zwischen dem internen Wärmeaustauscher (16) und dem Verdichter (12) angeordnet sind.

15. Reinigungsverfahren eines Klimasteuerungskreislaufs, der von einem Kältemittel durchflossen wird und insbesondere umfassend einen Verdichter und ein Expansionsventil, **dadurch gekennzeichnet, dass** eine Filtration des Kältemittels im Klimasteuerungskreislauf mittels einer Filtrationsvorrichtung nach einem der Ansprüche 1 bis 11 durchgeführt wird.
